(19) Europäisches Patentamt
European Patent Office
Office européen des brevets

(11) **EP 0 867 860 A2**

(12) **EUROPEAN PATENT APPLICATION**

(43) Date of publication:
30.09.1998 Bulletin 1998/40

(51) Int. Cl.⁶: **G10L 5/06**

(21) Application number: 98104636.0

(22) Date of filing: 14.03.1998

(84) Designated Contracting States:
AT BE CH DE DK ES FI FR GB GR IE IT LI LU MC NL PT SE
Designated Extension States:
AL LT LV MK RO SI

(30) Priority: 26.03.1997 DE 19712632

(71) Applicant:
DEUTSCHE THOMSON-BRANDT GMBH
78048 Villingen-Schwenningen (DE)

(72) Inventor: **Varga, Imre**
81477 München (DE)

(74) Representative:
Hartnack, Wolfgang, Dipl.-Ing.
Deutsche Thomson-Brandt GmbH
Licensing & Intellectual Property,
Göttinger Chaussee 76
30453 Hannover (DE)

(54) **Method and device for voice-operated remote control with interference compensation of appliances**

(57) Usually, a voice-operated control system for the remote control of electronic entertainment appliances is composed of a microphone, a signal processing means, a voice detector and a system manager for controlling the system. The voice-detection means itself is based on a pattern detection by means of which each spoken command is compared with stored information. In this context, there is the problem that the voice detectors do not unambiguously detect the patterns and as a result do not have the necessary immunity to interference if there is acoustic interference, in particular as a result of sound playback of the appliance. The commands then have to be uttered repeatedly until they are detected. In the case of very severe interference, voice-operated control may then even be completely impossible. According to the invention, the immunity to acoustic interference is improved in that a sound-compensation unit is provided in which the audio signals emitted by the appliance are estimated at the location of the microphone or the microphones by modelling the transmission paths in the space between the loudspeakers and the microphones, and are used to correct the microphone signal.

FIG. 1

EP 0 867 860 A2

**Description**

The invention relates to a method and a device for the voice-operated remote control of appliances, in particular of electronic entertainment appliances.

Background

Voice-operated remote control in entertainment electronics is becoming increasingly important. On the one hand, the voice-operated remote control significantly improves the ergonomy, that is to say the quality of the ways in which the appliances can be operated, and on the other hand it is made possible, often for the first time, for disabled people to use the appliances.

Usually, the voice-operated control system comprises a microphone, which converts the sound into an electrical signal, a signal processing means, a voice detector, which converts the electrical signals into words, and a system manager for controlling the system. The voice detection means itself is based on pattern detection; each spoken command is compared here with stored information.

Invention

In this context, there is the problem that the voice detectors do not unambiguously detect the pattern and as a result do not have the necessary immunity to error if the acoustic environment of the user is subject to noise, i.e. if there is acoustic interference, in particular as a result of sound playback of the appliance. The commands then have to be uttered repeatedly until they are detected. This reduces the attractiveness of the voice control system. In the case of very severe interference, voice-operated control may then even be completely impossible.

The invention is based on the object of specifying a system for improving immunity to acoustic interference during the voice-operated remote control of the appliances, in particular of electronic entertainment appliances. This object is achieved by means of the system specified in Claim 1.

In principle, the system according to the invention for the voice-operated remote control of appliances which emit audio signals via at least one loudspeaker, and which has a microphone or a plurality of microphones for converting voice commands into electrical signals and has a voice-detection unit for converting these electrical signals into control commands, consists in the fact that the microphone signal can be composed of voice commands, audio signals and other background noises and that a sound-compensation unit is provided in which the audio signals emitted by the appliance are estimated at the location of the microphone or the microphones by modelling the transmission paths in the space between the loudspeakers and the microphones, and are used to correct the microphone signal.

As a result, detection of the control commands is improved, which leads to increased immunity to error of the voice-operated remote control, or actually makes voice-operated remote control possible in the first place.

In this context, the microphone signals are preferably initially fed to the sound-compensation unit, then the compensated signals are fed to a noise-suppression unit in which background noises are eliminated as well as possible, and the signals are then fed to a voice-detection unit in which the commands are detected with the aid of pattern detection.

In this context, a microphone may be integrated in a unit (for example in a remote-control system) provided for this purpose; however, a microphone or a plurality of microphones may also be integrated in the housing of the appliance.

It may in particular be advantageous to acquire a monosignal from a plurality of audio signals and to feed it to the sound-compensation unit, because this reduces the complexity of the sound-compensation unit.

The sound compensator is particularly advantageously in the form of an adaptive NLMS-FIR filter. This makes sound compensation possible even, for example, when the persons speaking are moving.

Likewise, it is advantageous, if various loudspeaker signals are present, to provide a separate adaptive filter for each of the various loudspeaker signals, since this makes better compensation possible.

Finally, if there are a plurality of microphones, they may be arranged as an array in order to achieve a distinct directional characteristic.

Drawing

Exemplary embodiments of the invention are described with reference to the figures, of which;

- Fig. 1 shows a voice-operated control system with a remote-control system in which a microphone is integrated and which has monosignal formation of the loudspeaker signals,
- Fig. 2 is a block circuit diagram of an adaptive sound compensator,
- Fig. 3 is a block diagram of an arrangement for spectral subtraction for the suppression of noise,
- Fig. 4 shows a voice-operated control system with a remote-control system in which a microphone is integrated, without monosignal formation of the loudspeaker signals,
- Fig. 5 shows a voice-operated control system having a plurality of microphones which are integrated in the television housing.

Exemplary Embodiments

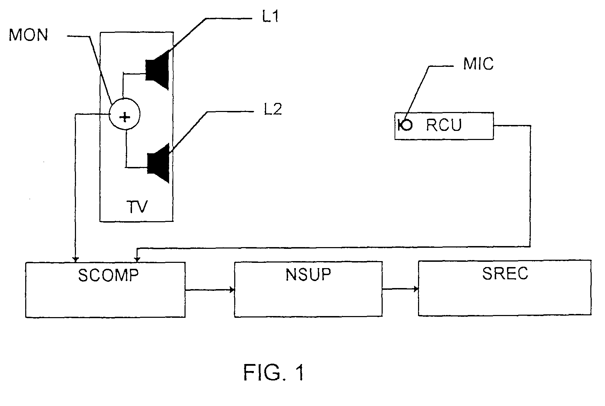

Fig. 1 illustrates a voice-operated control system according to the invention. A microphone MIC is in this case integrated into the remote-control system RCU.

The microphone here can have a specific directional characteristic (sphere, cardioid, supercardioid) so that as far as possible only the useful signal, i.e. the voice, is accepted. The remote-control system can be used to control the television set TV, for example by means of radio frequency modulation or via cable. Integrated in the television set TV are, inter alia, two loudspeakers L1 and L2 as well as a monoformer MON, a sound compensator SCOMP, a unit for noise suppression NSUP and a voice-detection unit SREC.

The microphone signal is normally composed of a combination of the useful signal, the television sound components and other noises in the space. The microphone signal is RF-modulated, transmitted into the appliance TV and fed there to the primary input of the sound compensator SCOMP. The signal, which is acquired by monoformation from the signals which arrive at the loudspeakers L1 and L2, is fed to a further input of the compensator (reference input or secondary input). The sound compensator then models the transmissions paths in the space between the loudspeakers and the microphone. Adaptive systems should be used to do this since the statistics of the various signal components are not known a priori.

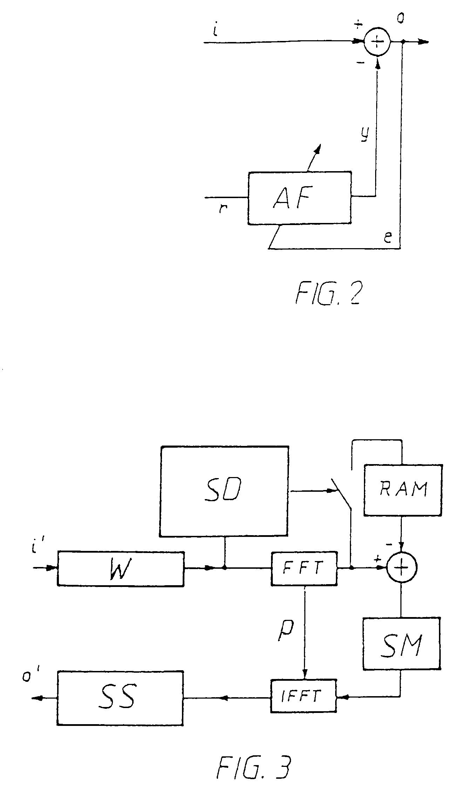

A simple design for an adaptive sound compensator is illustrated in Fig. 2. The microphone signal i is fed to the primary input and the monophone loudspeaker signal r is fed to the adaptive filter AF via a further input. The loudspeaker signal at the location of the microphone is estimated in the adaptive filter AF and supplies the filtered signal y. This signal y is then subtracted from the microphone signal i fed via the primary input, and thus supplies at the output o a signal e which is reduced by the loudspeaker signals. This signal e is in turn fed to the adaptive filter AF.

A possible way of designing the adaptive sound compensator is to use an adaptive NLMS-FIR filter. An NLMS algorithm, which is a special LMS (Least Mean Squares) algorithm is used in such a filter.

The LMS algorithm serves to adapt the co-efficients $h1, h2,...,hN$ of the FIR filter according to the following equation:

$$hi(n+1) = hi(n) + a*e(n)*x(n-i+1), \quad i = 1,2,...N$$

the variables being defined as follows

n:          discrete time index
a:          step size
x:          sampled value of the reference input
e:          error signal:
where e=d-y ,    d: signal at the primary input,
                  y: signal at the FIR filter output

The NLMS (normalized LMS) algorithm expands the LMS algorithm by normalizing the adaptation to the power of the reference input signal:

$$hi(n+1)=hi(n)+a*e(n)*x(n-i+1)/Px(n),$$

Px signifying the power of the signal x. Px can be calculated for example, according to

$$Px(n+1)=q*Px(n) + (1-q)*x^2(n) \quad ,q<1$$

The advantage of the NLMS algorithm in comparison with the LMS algorithm is the independence of the adaptation properties from the power of the input signal, which is especially important in the case of pulsating signals (for example voice, music).

The adaptive filter in the sound compensator then produces the approximated components of the microphone signal from the reference input, such components being correlated with the reference input. This means that the adaptive filter generates from the (monophone) loudspeaker signal those signal components which arrive at the microphone from the loudspeakers through the acoustic space. The output of the sound compensator is the difference signal of the microphone signal and of the output of the adaptive filter; for this reason it contains reduced loudspeaker signal components and unchanged useful signal components (voice).

This signal is then fed to the input of the noise-suppression means. This processing stage has the function of reducing the noise components which do not originate from the loudspeakers (for example street noise, other domestic appliances such as vacuum cleaners, background music etc).

In this context, a spectral subtraction can be used for noise suppression, as illustrated in Fig. 3. A voice interval detector SD decides, after windowing W of the input signal i', whether the respective block contains voice or an interval. The block is Fourier transformed FFT and the absolute value is calculated. If the block does not contain any voice, the measured spectrum of the absolute values is stored as the noise spectrum in a memory RAM. If, on the other hand, the block contains voice which is subject to interference, the spectrum of the absolute noise values stored in the previous interval is subtracted from the spectrum of absolute values of the block. The resulting spectrum of absolute output values is supplemented by the phase P of the input signal after smoothing SM, and is subjected to inverse Fourier transformation IFFT. Finally, the continuous signal is produced from the blocks, for example by a summation of samples of the signal, before the signal o' is output.

The conditioned signal at the output of the noise-suppression means then has a higher signal-to-noise ratio. This signal is fed to the input of the voice detector SREC which then provides better detection rates for the control commands and operates with greater immunity to errors.

Control commands are understood here to be the wide variety of user utterances which are directed at the appliance. In the case of so-called command-and-control systems these can be commands such as, for example, "picture brighter", "sound off" or "channel 1". Likewise, in the case of so-called dialogue systems, there may be a dialogue between the user and the appliance. Thus a control command may take the form, for example, "is there any tennis on today?" The appliance could then reply to this question, for example: "yes, at 6.30 pm on channel".

Before the voice-operated control system can be used, when there are voice-dependent detectors, voice training initially takes place during which the system learns how the respective user utters the control commands. The spoken commands are stored, and when there is a later voice-operated control procedure, they are compared with the spoken commands. Here, in particular in the case of composite commands which are composed of a plurality of words, it may be appropriate initially to display the command components on a display of the remote-control system or on screen. On the other hand, with speaker-independent detectors the training is already performed by the manufacturer.

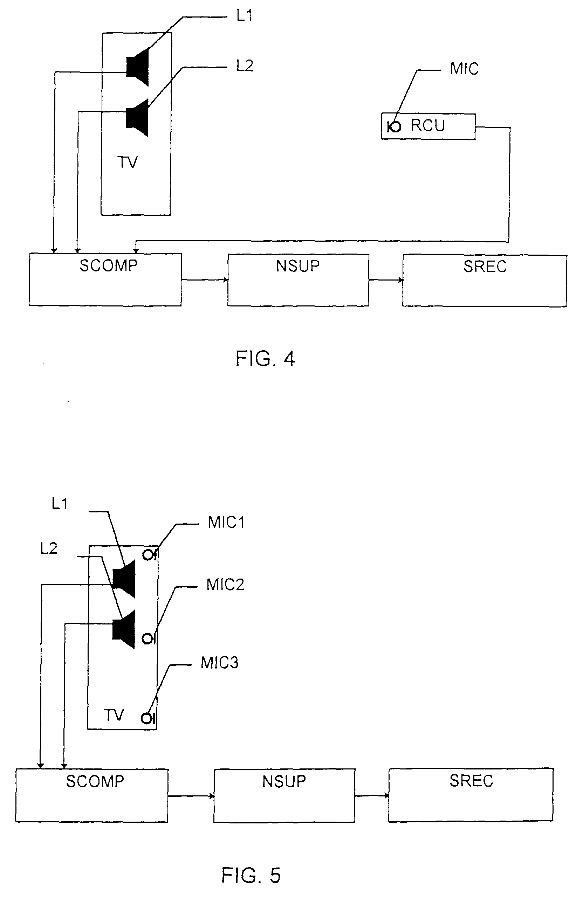

A further examplary embodiment is illustrated in Fig. 4. Here, the loudspeaker signals of the appliance (TV, stereo system) are not summed to form a monosignal but rather individually fed in each case to an adaptive filter in the sound compensator SCOMP. For this reason, a plurality of reference inputs for the adaptive sound compensator are provided. The error signal, and thus the output signal of this multi-reference sound compensator, is the difference between the microphone signal and the sum of all the adaptive filter outputs. A higher degree of expenditure on the adaptive filtering thus makes it possible to achieve a larger degree of suppression of the TV sound signal components in the microphone signal. This difference is significant especially when there is more than one loudspeaker, for example in surround systems with five loudspeakers or in the case of Dolby Prologic Playback.

The exemplary embodiment according to Fig. 5 is characterized by the use of a plurality of microphones MIC1, MIC2, MIC3 which are arranged as an array. In this way it is possible to achieve a distinct directional characteristic, thus permitting the speaker to be at a greater distance from a microphone.

A prerequisite here is that the useful signal impinges on the array from a specific direction, in particular from the front. The directional characteristic then comes about as a result of the geometry of the array. The microphones are in this case integrated into the housing of the appliance itself, for example the television, in order to permit a hands-free speaking.

Such an arrangement can also be used for operating computer games which usually also have a sound output. The computer game here can be played on a computer, on a television set or on a combination of these appliances. In the case of a voice-operated control system for a computer, the voice is usually input into the computer via a microphone and a sound card.

Instead of being integrated in the housing, the microphone can in turn also be integrated in a control device, for example a computer mouse or a so-called joystick, or be equipped as a head microphone which is located directly in front of the user's mouth.

The use of the invention makes it possible to increase the immunity to error of the voice-operated control system and thus, inter alia, to improve significantly the voice detection rate. As a result, improved voice-operated remote control of a wide variety of electronic entertainment appliances, such as TV sets, video recorders, satellite receivers, audio equipment and complete stereo systems as well as personal computers and other domestic appliances, is made possible.

**Claims**

1. System for the voice-operated remote control of appliances (TV) which emit audio signals via at least one loudspeaker (L1, L2), which has a microphone (MIC) or a plurality of microphones (MIC1, MIC2, MIC3) for converting voice commands into electrical signals and has a voice-detection unit (SREC) for converting these electrical signals into control commands, characterized in that the microphone signal can be composed of voice commands, audio signals and other background noises, and in that a sound-compensation unit (SCOMP) is provided in which the audio signals emitted by the appliance are estimated at the location of the microphone or the microphones by modelling the transmission paths in the space between the loudspeakers and the microphones, and are used to correct the microphone signal.

2. System according to Claim 1, characterized in that the microphone signals are initially fed to the sound-compensation unit (SCOMP), then the compensated signals are fed to a noise-suppression unit (NSUP), in which background noises are eliminated as well as possible, and the signals are then fed to a voice-detection unit (SREC) in which the commands are detected with the aid of pattern detection.

3. System according to Claim 1 or 2, characterized in that the sound-compensation unit (SCOMP) contains one or more adaptive filters (AF).

4. System according to Claim 3, characterized in that various adaptive filters are provided for audio signals from various loudspeakers.

5. System according to Claim 3 or 4, characterized in that the adaptive filter or filters are designed in the form of adaptive NLMS-FIR filters.

6. System according to one of the preceding claims, characterized in that a monosignal (MON) is acquired from a plurality of audio signals, said monosignal being fed to the sound-compensation unit.

7. System according to one of the preceding claims, characterized in that a microphone (MIC) is integrated in a unit (RCU), in particular a remote-control system provided for operating the appliance.

8. System according to one of the preceding claims, characterized in that at least one microphone (MIC1, MIC2, MIC3) is integrated in the housing of the appliance (TV).

9. System according to one of the preceding claims, characterized in that a plurality of microphones are arranged as an array in order to achieve a distinct directional characteristic.

FIG. 1

FIG. 2

FIG. 3

FIG. 4

FIG. 5